# EUROPÄISCHE PATENTSCHRIFT

(11) **EP 2 377 994 B1**
(45) Veröffentlichungstag und Bekanntmachung des Hinweises auf die Patenterteilung: **13.01.2016**
(21) Anmeldenummer: 10004061.7
(22) Anmeldetag: 16.04.2010
(51) Int. Cl.: E01C 19/48

(54) **Materialfördersystem für Straßenfertiger und Beschicker**
Material transport system for road finisher and feeder
Système de transport de matériaux pour finisseuses de route et chargeurs

(43) Veröffentlichungstag der Anmeldung: 19.10.2011
(73) Patentinhaber: Joseph Vögele AG, 67067 Ludwigshafen (DE)
(72) Erfinder: Buschmann, Martin, Dipl.-Ing., 67435 Neustadt (DE); Fickeisen, Steffen, 67098 Bad Dürkeim (DE)
(74) Vertreter: Grünecker Patent- und Rechtsanwälte PartG mbB

(56) Entgegenhaltungen:
- EP-A1- 0 957 204
- EP-A2- 1 213 390
- WO-A1-2009/061278
- DE-U1-202008 010 719

## Beschreibung

Die Erfindung bezieht sich auf ein Materialfördersystem gemäß des Oberbegriffs des Patentanspruchs 1.

Bituminös gebundene Mischgüter werden in Mischanlagen hergestellt. Hierzu wird Splitt in einem Trommelofen erhitzt und anschließend einem Mischer zugeführt. In diesem Mischer wird zusätzlich heißes Bitumen eingedüst und mit dem heißen Splitt vermischt. Diese Mischung wird dann in Heißsilos zwischengelagert oder direkt mittels LKW zur Straßenbaustelle transportiert. Der Asphalt verlässt den Mischer mit einer hohen und sehr gleichmäßigen Temperatur. Durch die anschließende Lagerung und vor allem durch den Transport kühlt das Mischgut ungleichmäßig ab. Typischerweise besitzt der Asphalt bei Anlieferung an der Baustelle immer noch eine sehr hohe Kerntemperatur, die Randbereiche sind jedoch stark abgekühlt. Ein Mischgut mit einer gleichmäßigen Temperatur liegt dann nicht mehr vor. Eine gleichmäßige Temperaturverteilung im Mischgut ist einer der wichtigsten Parameter für den Einbau und die Verdichtung von Asphalt. Viele stoffliche Eigenschaften des Asphalts hängen von dieser Temperatur ab. Im Wesentlichen hängt das mit der sich mit der Temperatur verändernden Viskosität des Bitumens zusammen. Daher ist eine ungleichmäßige Temperatur des Mischguts ein Faktor, der die Qualität des Fahrbahnbelags negativ beeinflusst. Sie führt zu Dichteunterschieden in der Tragfähigkeit, ebenso wie zu Fehlern in der Schichtstärke und in Folge dessen zu Unebenheiten der Fahrbahn.

Diese Erkenntnisse wurden genutzt und in ein Beschickersystem umgesetzt, das die Homogenität der Mischguttemperatur verbessern soll. Zu diesem Zweck setzt man z. B. Förderschnecken ein, die quer zum Hauptförderstrom im Gutbunker angeordnet sind. Der Antrieb der Förderschnecken ist mit dem Primärförderer für den Hauptförderstrom verbunden. Folglich ist die Drehzahl der Förderschnecken proportional zur Förderleistung des Primärförderers. Durch die Förderschnecken wird während des Beschickungsprozesses permanent kälteres Mischgut aus den Randbereichen in den heißeren Hauptförderstrom gefördert. Diese permanente Durchmischung führt zu einer besseren Temperaturhomogenität des Mischguts. Durch die feste Kopplung der Antriebe der Förderschnecken und der Bandanlage des Primärförderers sind diesem Beschickersystem Grenzen gesetzt. So ist es beispielsweise nicht möglich, die Förderschnecken zu Beginn des Förderprozesses abzuschalten: Dies erscheint aber sinnvoll, da der erste Materialschwall, der vom LKW kommt, relativ kalt ist und dem Mischgut zunächst nicht unbedingt beigemischt werden sollte. Außerdem ist es nicht möglich, das Verhältnis von Querfördermenge und Hauptförderstrom zu verändern, um dadurch das Verhältnis von kaltem Randmaterial zu heißem Kernmaterial zu steuern.

Die WO 2009/061278 A1 beschreibt eine Fördervorrichtung für ein Straßenbaufahrzeug. Die Fördervorrichtung umfasst einen Materialbunker zur Aufnahme von Einbaumischgut, wobei der Materialbunker zwei Bunkerhälften mit darin angeordneten Querförderschnecken umfasst. Durch die Querförderschnecken wird das Einbaumischgut aus den Bunkerhälften heraus auf eine Längsfördereinrichtung transportiert. Dabei ist es möglich, die Geschwindigkeit der Querförderschnecken unabhängig von der Geschwindigkeit der Längsfördereinrichtung einzustellen.

Der Erfindung liegt die Aufgabe zu Grunde, ein Materialfördersystem für einen Beschicker bzw. für einen Straßenfertiger zu schaffen, mit dem unter Verwendung einfacher konstruktiver Mittel eine verbesserte Qualität im Mischgut erreichbar ist.

Diese Aufgabe wird erfindungsgemäß gelöst mit den technischen Merkmalen des Anspruchs 1. Verbesserte Weiterbildungen sind durch die Merkmale der Unteransprüche gegeben.

Die Erfindung bezieht sich auf ein Materialfördersystem für Straßenfertiger und Beschicker. Dieses umfasst einen Gutbunker, der eine erste und eine zweite Bunkerhälfte besitzt, eine Hauptfördereinrichtung, die einen Hauptförderstrom definiert und zwischen der ersten und der zweiten Bunkerhälfte verläuft, sowie Förderschnecken, die einen Querförderstrom definieren und in den Bunkerhälften angeordnet sind, wobei die Förderschnecken gemäß der Erfindung unabhängig von der Hauptfördereinrichtung betreibbar sind. Folglich kann der Bediener das Verhältnis von Quer- zu Hauptförderstrom verändern, um eine Mischtemperatur nach Verlassen des Gutbunkers gezielt zu beeinflussen.

Bei einer zweckmäßigen Ausführungsform ist ein Steuersystem zum Steuern des Querförderstroms unabhängig vom Hauptförderstrom vorhanden, um ein Verhältnis zwischen dem Querförderstrom und dem Hauptförderstrom zu steuern. Damit lässt sich besonders genau eine erwünschte, homogene Mischtemperatur im Einbaugut erreichen. Dabei kann durch eine entsprechende Ablaufsteuerung das Anlaufen der Förderschnecken verzögert erfolgen. Hierdurch wird erreicht, dass zu Beginn des Beschickungszyklus möglichst schnell heißes Kernmaterial in den Hauptförderstrom gelangt. Erst danach werden die Förderschnecken hochgefahren. Ebenfalls bietet sich die Möglichkeit, dass am Ende des Beschickungszyklus die Förderschnecken frühzeitig abgeschaltet werden. Dadurch wird verhindert, dass das erkaltete Einbaugut aus den Randbereichen vollständig verbraucht wird.

Die Einschaltverzögerung der Förderschnecken bzw. das frühzeitige Abschalten kann durch eine Ablaufsteuerung erfolgen bzw. alternativ über ein Temperaturmesssystem des Hauptförderstroms, welches die Temperatur des Mischguts nach Verlassen des Materialbunkers erfasst. Die Temperatur des Hauptförderstroms dient dann als Kriterium, um das An- bzw. Abschalten der Förderschnecken entsprechend zu regeln. Basierend auf der Temperatur des Hauptförderstroms können somit die Förderschnecken derartig betrieben werden, dass sich eine homogene Mischtemperatur des Einbauguts einstellt. Ebenso kann das Temperaturmesssystem zur Messung der Temperatur des Querförderstroms vorgesehen sein, um einen Betrieb der Förderschnecken unabhängig zur Hauptfördereinrichtung zu steuern.

Vorzugsweise ist an den Bunkerhälften zur Hauptfördereinrichtung hin ein schwenkbares Rutschblech angeordnet, um Fördergut auf die Hauptfördereinrichtung zu leiten. Dadurch kann das Fördergut sicher auf die Hauptfördereinrichtung geleitet werden und gleichzeitig wird durch das Rutschblech verhindert, dass Fördergut in das Fahrwerk der Hauptfördereinrichtung gelangt.

Bei einer zweckmäßigen Ausführungsform umfasst die Hauptfördereinrichtung zwei separate Förderbänder, die durch eine Trennwand voneinander getrennt sind. Die Trennwand unterstützt ein zielgerechtes Beschütten der beiden Förderbänder mit Einbaugut.

Es besteht auch die Möglichkeit, dass das Förderband bzw. die Förderbänder der Hauptfördereinrichtung unabhängig voneinander betreibbar sind. Somit wird gewährleistet, dass bei einem frühzeitigen Entleeren einer Bunkerhälfte das zugehörige Förderband frühzeitig abgestellt werden kann. Zwischen den Förderbändern kann ebenfalls ein Verhältnis des Transports des Einbauguts eingestellt werden.

Bei einer zweckmäßigen Ausführungsform sind die Bunkerhälften in einem Winkel zwischen null und fünfundvierzig Grad zur Hauptfördereinrichtung hin gleichzeitig oder unabhängig voneinander kippbar. Dadurch lässt sich ein Transport des Einbauguts aus den Bunkerhälften hinaus zur Hauptfördereinrichtung beschleunigen.

Vorzugsweise kippen die Förderschnecken bei einem Kippen der Bunkerhälften mit. Die gekippten Förderschnecken unterstützen dabei einen beschleunigten Transport des Einbauguts.

Vorzugsweise ist mindestens eine Förderschnecke pro Bunkerhälfte vorhanden. Je nach Kapazität der Bunkerhälften können mehrere Förderschnecken zum Einsatz kommen. Somit lässt sich das gesamte Einbaumaterial von den Bunkerhälften mittels Förderschnecken hin zur Hauptfördereinrichtung transportieren.

Als besonders günstig hat sich herausgestellt, wenn ein vorderes Ende der Förderschnecken über die Hauptfördereinrichtung ragt. Damit wird der Querförderstrom besonders effektiv in den Hauptförderstrom eingeleitet.

Vorteilhaft ist es, wenn die Förderschnecken der ersten Bunkerhälfte unabhängig von den Förderschnecken der zweiten Bunkerhälfte betreibbar sind. Somit können diese Förderschnecken frühzeitig abgestellt werden, deren Bunkerhälfte bereits entleert ist. Außerdem ist es möglich, je nach Temperaturverteilung im Einbaugut der jeweiligen Bunkerhälften, die jeweiligen Förderschnecken separat anzutreiben.

Vorzugsweise sind die Förderschnecken in den Bunkerhälften in einem Winkel zur Hauptfördereinrichtung angeordnet, der größer ist als sechzig Grad. Durch diese Schrägstellung kann bereits in den Bunkerhälften eine verbesserte Mischung des Einbauguts stattfinden.

Bei einer zweckmäßigen Ausführungsform sind die Förderschnecken links und rechts herum drehbar. Dabei kann durch eine Linksdrehung bzw. durch eine Rechtsdrehung der Förderschnecken Einbaugut zur Hauptfördereinrichtung hin gefördert bzw. von der Hauptfördereinrichtung ferngehalten werden. Eine Drehung, die entgegen der Querförderstromrichtung erfolgt, kann bezwecken, dass Einbaumaterial in den Bunkerhälften zurückgehalten wird, und somit nicht den Hauptförderstrom beeinflusst.

Optional können die Bunkerhälften gleichzeitig oder unabhängig um eine Achse X nach hinten schwenkbar gelagert sein. Durch das Schwenken der Bunkerhälften um die Achse X wird der Gutbunker nach hinten schräg gestellt. Dadurch kann Einbaugut, welches sich noch in den Bunkerhälften befindet, gezielt in einer hinteren Zone des Gutbunkers angesammelt werden. Eine Schrägstellung des Gutbunkers um die Achse X ermöglicht einen vollständigen Verbrauch des Einbauguts.

Der Erfindungsgegenstand wird nun anhand der Zeichnungen erläutert.
Es zeigen:
Fig. 1 eine schematische Draufsicht eines Materialfördersystems, welches bei Beschickern bzw. bei Straßenfertigern einsetzbar ist,
Fig. 2 eine Schnittdarstellung des Materialfördersystems,
Fig. 3 eine seitliche Draufsichtdarstellung des Materialfördersystems.

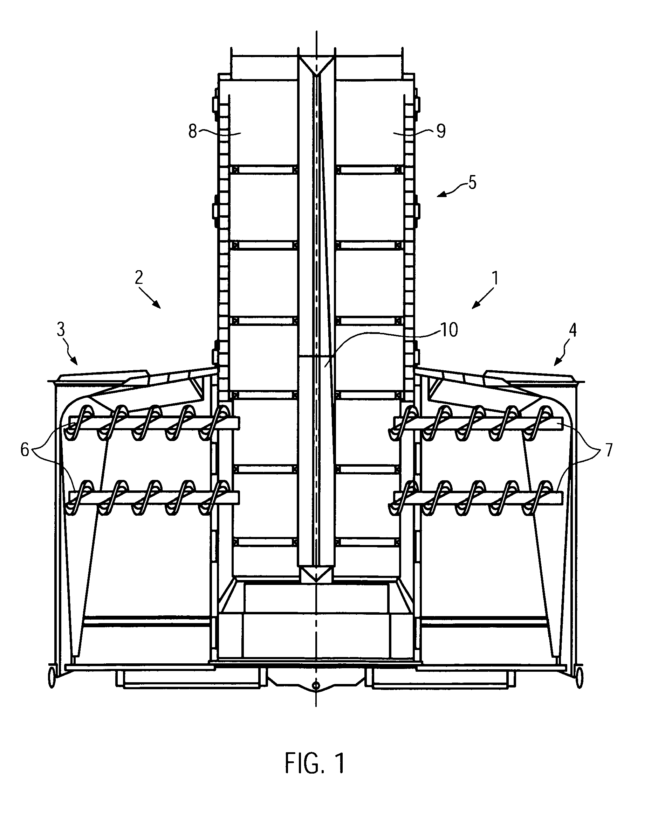

Die Fig. 1 bezieht sich auf ein Materialfördersystem 1, wie es gemäß der Erfindung bei Straßenfertigern bzw. Beschickern anwendbar ist. Das Materialfördersystem 1 macht sich zur Aufgabe, die Homogenisierung der Einbauguttemperatur zu begünstigen, wobei eine Regelung der Temperatur des Einbauguts möglich ist. Weil eine ungleichmäßige Temperaturverteilung im Einbaugut beim Asphaltieren zu Schäden im Straßenbelag führen kann, bietet das Materialfördersystem 1 eine technische Lösung, um einer ungleichmäßigen Temperaturverteilung im Einbaugut entgegen zu wirken. Das Materialfördersystem 1 umfasst einen Gutbunker 2, der seitlich eine erste und eine zweite Bunkerhälfte 3, 4 besitzt. Vor dem Einbau bzw. vor dem Beschicken wird im Gutbunker 2 bituminöses Einbaugut vorgelagert. Dabei können die erste und die zweite Bunkerhälfte 3, 4 besonders viel Einbaugut aufnehmen. Das Einbaugut wird meistens von einem LKW zur Baustelle transportiert, um dann einem Beschicker bzw. einem Straßenfertiger zugeführt zu werden. Bereits während des Transports hat sich auf dem LKW im Einbaugut eine ungleichmäßige Temperaturverteilung ausgebildet. Folglich ist das Einbaugut, welches dem Gutbunker 2 zugeschüttet wird, ebenfalls durch eine inhomogene Temperaturverteilung charakterisiert.

Das Materialfördersystem 1 umfasst zusätzlich eine Hauptfördereinrichtung 5, die relativ zum Gutbunker 2 mittig verläuft und diesen zentral in seine beiden Bunkerhälften 3, 4 unterteilt. Der Hauptfördereinrichtung 5 wird von der ersten und /oder der zweiten Bunkerhälfte 3, 4 Einbaugut zugeführt, welches dann als Hauptförderstrom den Gutbunker 2 verlässt. Die Hauptfördereinrichtung 5 transportiert eine gewünschte Menge an Einbaugut zum Einbauort des Straßenfertigers bzw. ist Teil eines Beschickersystems.

Quer zur Richtung des Hauptförderstroms sind Förderschnecken 6, 7 in der ersten und der zweiten Bunkerhälfte 3, 4 angeordnet. Die Förderschnecken 6, 7 definieren einen Querförderstrom, der Einbaugut aus der ersten und der zweiten Bunkerhälfte 3, 4 in Richtung Hauptfördereinrichtung 5 transportiert. Eine homogene Temperaturverteilung im Einbaugut des Hauptförderstroms wird besonders dadurch erreicht, dass die Förderschnecken 6, 7 unabhängig von der Hauptfördereinrichtung 5 betreibbar sind. Eine Vermischung des Hauptförderstroms mit dem Querförderstrom kommt zustande, wenn Einbaugut durch die Förderschnecken 6, 7 quer zur Hauptförderstromrichtung gefördert wird.

Werden die Förderschnecken 6, 7 abgeschaltet, kann das Einbaugut in der ersten und der zweiten Bunkerhälfte 3, 4 zurückgehalten werden. Ein Abschalten der Förderschnecken 6, 7 ist besonders wünschenswert, wenn das Einbaugut der ersten und der zweiten Bunkerhälfte 3, 4 erkaltet ist und eine niedrige Temperatur des Einbauguts der ersten und der zweiten Bunkerhälfte 3, 4 eine höhere Temperatur des Einbauguts des Hauptförderstroms nicht beeinflussen soll.

Um den Betrieb der Förderschnecken 6, 7 bzw. der Hauptfördereinrichtung 5 unabhängig voneinander zu steuern, umfasst das Materialfördersystem 1 ein Steuersystem. Das Steuersystem kann ein Verhältnis zwischen dem Querförderstrom und dem Hauptförderstrom einstellen. Das Steuersystem kann z. B. als Ablaufsteuerung vorliegen, die das Anlaufen der Förderschnecken 6, 7 verzögert bzw. die Förderschnecken 6, 7 frühzeitig abstellt.

Beim Entladen des LKWs wird heißes Einbaugut zuerst auf die Hauptfördereinrichtung 5 platziert. Um dieses sofort ohne Beimischung von Einbaugut aus dem Querförderstrom dem Einbauort zuzuführen, bleiben die Förderschnecken 6, 7 aus. Erst nach einer gewissen verstrichenen Zeit werden dann durch die Ablaufsteuerung die Förderschnecken 6, 7 angeschaltet. Außerdem kann durch die Ablaufsteuerung eine gänzliche Entleerung der ersten und der zweiten Bunkerhälfte 3, 4 verhindert werden, indem die Förderschnecken 6, 7 frühzeitig abgestellt werden. Dadurch bleibt erkaltetes Randmaterial in den Bunkerhälften 3, 4 zurück. Das erkaltete Randmaterial kann mit einer neuen Ladung von Einbaugut zu einem Einbaugut mit einer höheren Temperatur vermischt werden.

Durch den unabhängigen Antrieb der Förderschnecken 6, 7 und der Hauptfördereinrichtung 5 kann gezielt ein Volumenstrom in Hauptförderrichtung eingestellt werden. Folglich kann selbst bei einer hohen Geschwindigkeit der Hauptfördereinrichtung 5 die Geschwindigkeit der Förderschnecken 6, 7 gedrosselt sein bzw. bei einer niedrigen Geschwindigkeit der Hauptfördereinrichtung 5 die Geschwindigkeit der Förderschnecken 6, 7 verhältnismäßig hoch sein.

Ein unabhängiger Antrieb kann auch durch ein Temperaturmesssystem, welches zum Messen einer Temperatur des Hauptförderstroms nach dem Verlassen des Gutbunkers bzw. einer Temperatur des Querförderstroms vorhanden ist, präzise eingestellt werden. Indem die Temperatur des Hauptförderstroms bzw. des Querförderstroms gemessen wird, kann durch das Messergebnis der Betrieb der Förderschnecken 6, 7 dementsprechend geregelt werden. Zusätzlich kann als Reaktion auf die Temperaturmessung des Hauptförderstroms bzw. des Querförderstroms die Geschwindigkeit der Hauptfördereinrichtung 5 bzw. der Förderschnecken 6, 7 geregelt werden. Oft erscheint es sinnvoll, bei der Messung einer hohen Temperatur des Hauptförderstroms eine Verlangsamung der Hauptfördereinrichtung 5 zu veranlassen und gleichzeitig die Geschwindigkeit der Förderschnecken 6, 7 hochzufahren. Im Gegensatz dazu wird der Betrieb der Förderschnecken 6, 7 verlangsamt bzw. abgeschaltet, wenn sich eine Temperatur nahe einer Solltemperatur des Hauptförderstroms einstellt.

Die Hauptfördereinrichtung 1 kann aus zwei Förderbändern 8, 9 bestehen. Während das Förderband 8 im Wesentlichen den Querförderstrom der ersten Bunkerhälfte 3 aufnimmt, dient das Förderband 9 zur Aufnahme des Querförderstroms der zweiten Bunkerhälfte 4. Der Lauf beider Förderbänder 8, 9 kann unabhängig voneinander geregelt werden. Je nach gewünschtem Volumenstromverhältnis zwischen den beiden Förderbändern 8, 9 lässt sich deren Geschwindigkeit unabhängig voneinander einstellen.

Zwischen den beiden Förderbändern 8, 9 kann eine Trennwand 10 angeordnet sein. Die Trennwand 10 kann verhindern, dass Einbaugut von einem der Förderbänder 8, 9 in das Fahrgestell der Hauptfördereinrichtung 5 fällt. Außerdem unterstützt die Trennwand eine gleichmäßige Verteilung des Einbauguts auf den Förderbändern 7, 8.

Um den Querförderstrom, kommend aus der ersten und der zweiten Bunkerhälfte 3, 4, effektiv in den Hauptförderstrom einzuleiten, ist an den Bunkerhälften 3, 4 ein schwenkbares Rutschblech 11 angeordnet. Durch das Rutschblech 11 kann verhindert werden, dass Einbaugut in einen Bereich zwischen den Bunkerhälften 3, 4 und der Hauptfördereinrichtung 5 fällt.

Um eine Förderung des Querförderstroms zu beschleunigen, können die Bunkerhälften 3, 4 wahlweise gleichzeitig oder unabhängig voneinander in einem Winkel bis zu fünfundvierzig Grad zur Hauptförderstromrichtung gekippt werden. Bei einem Kippen der Bunkerhälften 3, 4 kippen die Förderschnecken 6, 7 mit, ohne dabei mit der Hauptfördereinrichtung 5 zu kollidieren. Bei der Erfindung können je nach Bedarf die Förderschnecken 6, 7 zugeschaltet werden, um einen Querförderstrom zu unterstützen bzw. Einbaumaterial der Bunkerhälften 3, 4 mit dem Einbaumaterial des Hauptförderstroms zu vermischen. Es hat sich als nützlich herausgestellt, mindestens eine Förderschnecke pro Bunkerhälfte einzusetzen.

Eine effektive Vermischung des Querförderstroms mit dem Hauptförderstrom und damit eine verbesserte Homogenisierung der Einbauguttemperatur wird dadurch unterstützt, dass die Förderschnecken 6, 7 über das Rutschblech 11 hinaus in den Hauptförderstrom der Hauptfördereinrichtung 5 hineinragen. Dies führt zu einer optimalen Vermischung des Querförderstroms mit dem Hauptförderstrom.

Optional können auch die Förderschnecken 6 der ersten Bunkerhälfte 3 unabhängig von den Förderschnecken 7 der zweiten Bunkerhälfte 4 betrieben werden. Dies bietet die Möglichkeit nur aus einer der beiden Bunkerhälften 3, 4 Einbaugut dem Hauptförderstrom zu untermischen, während ein Querförderstrom der anderen Bunkerhälfte nicht stattfindet. Dies erscheint sinnvoll, wenn mengenmäßig nur etwa die Hälfte an Einbaugut gefördert werden soll. Zusätzlich kann durch die Ablaufsteuerung die Geschwindigkeit der Förderschnecken 6 unabhängig von der Geschwindigkeit der Förderschnecken 7 eingestellt werden.

In der ersten und der zweiten Bunkerhälfte 3, 4 können die Förderschnecken 6, 7 in einem Winkel β zur Hauptförderstromrichtung eingestellt werden. Je nach Anwendungsfall kann der Winkel β größer als sechzig Grad sein. Ein Anstellen der Förderschnecken 6, 7 entgegen der Richtung des Hauptförderstroms ermöglicht eine Vermischung des Querförderstroms mit dem Hauptförderstrom in einem hinteren Bereich des Gutbunkers 2. Dadurch wird erreicht, dass das vermischte Einbaugut zunächst eine gewisse Strecke entlang der Hauptfördereinrichtung 5 zurücklegt, bevor es die Temperaturmesseinrichtung passiert, wodurch eine realistischere Temperaturmessung des Hauptförderstroms das Temperaturmesssystems stattfindet. Alternativ können die Förderschnecken 6, 7 auch in der Richtung des Hauptförderstroms angestellt werden, wodurch der Transport des Einbauguts entlang der Hauptförderstromrichtung beschleunigt werden kann.

In einer weiteren Ausführungsform sind die Förderschnecken 6, 7 beidseitig drehbar, d. h. sie können links und rechts herum gedreht werden. Je nach Bauart der Förderschnecken 6, 7 kann bei einer Drehung entgegen der Richtung des Querförderstroms Einbaugut in der Bunkerhälfte 3, 4 zurückgehalten werden.

Eine Drehung der Förderschnecken 6, 7 entgegen der Richtung des Querförderstroms bezweckt auch, dass das Einbaugut in den Bunkerhälften 3, 4 umgewälzt wird. Während der Umwälzung in den Bunkerbehälter 3, 4 kann eine Vermischung des Querförderstroms mit dem Hauptförderstrom weitestgehend vermieden werden. Wird das Einbaugut aus den Bunkerhälften 3, 4 erwünscht, ändert sich die Drehrichtung der Förderschnecken 6, 7, um den Querförderstrom in den Hauptförderstrom zu leiten.

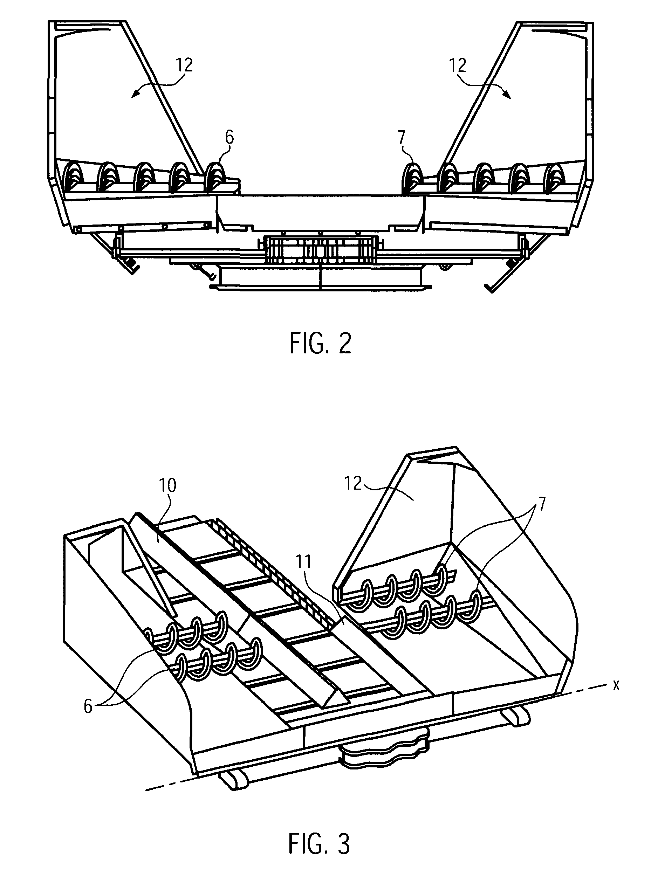

Die Fig. 2 zeigt eine Schnittdarstellung des Materialfördersystems 1. Die Fig. 2 zeigt hintere Bordwände 12, die das Einbaugut im Gutbunker 2 stützen. Die hinteren Bordwände 12 sind doppelwandig ausgebildet, und schließen einen Luftspalt ein. Durch die Doppelwandige Ausbildung der hinteren Bordwände 12 kann ein exzessiver Wärmetransfer auf das Fahrgestell des Beschickers bzw. Straßenfertigers verhindert werden. Außerdem wird durch die Fig. 2 verdeutlicht, dass die Förderschnecken 6, 7 aus den Bunkerhälften 3, 4 über die Hauptfördereinrichtung 5 ragen.

Durch die Fig. 3 ist die Geometrie der Bunkerhälften 3, 4 deutlich dargestellt. Um das Einmischen des Querförderstroms in den Hauptförderstrom zu beeinflussen können auch die Bunkerhälften 3, 4 unabhängig voneinander bzw. gleichzeitig um eine Achse X geschwenkt werden. Das Schwenken um die Achse X veranlasst das Einmischen des Querförderstroms auf einem höheren Niveau in den Hauptförderstrom. Optional kann der Gutbunker 2 auch eine vordere Schließbordwand umfassen (nicht gezeigt) gegen welche sich das Einbaugut verlagert, wenn sich der Gutbunker 2 im Uhrzeigersinn um die Achse X schwenkt.

## Patentansprüche

1. Materialfördersystem (1) für Straßenfertiger und Beschicker, umfassend:
einen Gutbunker (2), der eine erste und eine zweite Bunkerhälfte (3, 4) umfasst,
eine Hauptfördereinrichtung (5), die einen Hauptförderstrom definiert und zwischen der ersten und der zweiten Bunkerhälfte (3, 4) verläuft, und
Förderschnecken (6, 7), die einen Querförderstrom definieren und in den Bunkerhälften (3, 4) angeordnet sind, wobei die Förderschnecken (6, 7) unabhängig von der Hauptfördereinrichtung (5) betreibbar sind,
**gekennzeichnet durch**,
ein Temperaturmesssystem zum Messen einer Temperatur des Hauptförderstroms und/oder des Querförderstroms, um einen Betrieb der Förderschnecken (6, 7) unabhängig zur Hauptfördereinrichtung (5) zu steuern.

2. Materialfördersystem nach Anspruch 1, **gekennzeichnet durch** ein Steuersystem zum Steuern des Querförderstroms unabhängig vom Hauptförderstrom, um ein Verhältnis zwischen dem Querförderstrom und dem Hauptförderstrom zu steuern.

3. Materialfördersystem nach Anspruch 1 oder 2, **dadurch gekennzeichnet, dass** an den Bunkerhälften (3, 4) zur Hauptfördereinrichtung (5) hin ein schwenkbares Rutschblech (II) angeordnet ist, um Fördergut auf die Hauptfördereinrichtung (5) zu leiten.

4. Materialfördersystem nach Anspruch 1 bis 3, **dadurch gekennzeichnet, dass** die Hauptfördereinrichtung (5) zwei Förderbänder (8, 9) umfasst, die durch eine Trennwand (10) voneinander getrennt sind.

5. Materialfördersystem nach Anspruch 4, **dadurch gekennzeichnet, dass** die Förderbänder (8, 9) unabhängig voneinander betreibbar sind.

6. Materialfördersystem nach einem der Ansprüche 1 bis 5, **dadurch gekennzeichnet, dass** die Bunkerhälften (3, 4) in einem Winkel 0°< α <45° zur Hauptfördereinrichtung (5) hin gleichzeitig oder unabhängig voneinander kippbar sind.

7. Materialfördersystem nach einem der Ansprüche 1 bis 6, **dadurch gekennzeichnet, dass** bei einem Kippen der Bunkerhälften (3, 4) die Förderschnecken (6, 7) mitkippen.

8. Materialfördersystem nach einem der Ansprüche 1 bis 7, **dadurch gekennzeichnet, dass** eine oder mehr Förderschnecken (6, 7) pro Bunkerhälfte (3, 4) vorhanden sind.

9. Materialfördersystem nach einem der Ansprüche 1 bis 8, **dadurch gekennzeichnet, dass** ein Vorderende der Förderschnecken (6, 7) über die Hauptfördereinrichtung (5) ragt.

10. Materialfördersystem nach einem der Ansprüche 1 bis 9, **dadurch gekennzeichnet, dass** die Förderschnecken (6) der ersten Bunkerhälfte (3) unabhängig von den Förderschnecken (7) der zweiten Bunkerhälfte (4) betreibbar sind.

11. Materialfördersystem nach einem der Ansprüche 1 bis 10, **dadurch gekennzeichnet, dass** die Förderschnecken (6, 7) zur Hauptfördereinrichtung (5) hin in einem Winkel β > 60° angeordnet sind.

12. Materialfördersystem nach einem der Ansprüche 1 bis 11, **dadurch gekennzeichnet, dass** die Förderschnecken (6, 7) links- und rechtsrum drehbar sind.

13. Materialfördersystem nach einem der Ansprüche 1 bis 12, **dadurch gekennzeichnet, dass** die Bunkerhälften (3, 4) gleichzeitig oder unabhängig um eine Achse x schwenkbar gelagert sind.

14. Materialfördersystem nach einem der Ansprüche 1 bis 13, **dadurch gekennzeichnet, dass** zu Beginn und/oder am Ende eines Beschickungszykluses die Förderschnecken (6, 7) verspätet einschaltbar und/oder frühzeitig abschaltbar sind.

15. Straßenfertiger oder Beschicker mit einem Materialfördersystem (1) gemäß einem der Ansprüche 1 bis 14.

## Claims

1. Material conveyor system (1) for a road paver and feeder, comprising:
a material hopper (2), which comprises a first and a second hopper half (3, 4),
a main conveyor device (5), which defines a main conveyor flow and which runs between the first and the second hopper halves (3, 4), and
conveying screws (6, 7), which define a transverse conveyor flow and which are arranged in the hopper halves (3, 4), wherein the conveying screws (6, 7) can be operated independently of the main conveyor device (5),
**characterised by**
a temperature measurement system for measuring a temperature of the main conveyor flow and / or of the transverse conveyor flow in order to control an operation of the conveying screws (6, 7) independently of the main conveyor device (5).

2. Material conveyor system according to Claim 1 **characterised by** a control system for controlling the transverse conveyor flow independently of the main conveyor flow in order to control a relationship between the transverse conveyor flow and the main conveyor flow.

3. Material conveyor system according to Claim 1 or 2 **characterised in that** a sheet metal chute (11) that can be pivoted towards the main conveyor device (5) is arranged on the hopper halves (3, 4) in order to guide the conveyed material on to the main conveyor device (5).

4. Material conveyor system according to Claims 1 to 3 **characterised in that** the main conveyor device (5) comprises two conveyor belts (8, 9) that are separated from each other by a separating wall (10).

5. Material conveyor system according to Claim 4 **characterised in that** the conveyor belts (8, 9) can be operated independently of each other.

6. Material conveyor system according to one of the Claims 1 to 5 **characterised in that** the hopper halves (3, 4) can be simultaneously or independently of one another tilted towards the conveyor device (5) at an angle 0°< α <45°.

7. Material conveyor system according to one of the Claims 1 to 6 **characterised in that** the conveying screws (6, 7) also tilt when the hopper halves (3, 4) are tilted.

8. Material conveyor system according to one of the Claims 1 to 7 **characterised in that** one or more conveying screws (6, 7) are present per hopper half (3, 4).

9. Material conveyor system according to one of the Claims 1 to 8 **characterised in that** a front end of the conveying screws (6, 7) juts over the main conveyor device (5).

10. Material conveyor system according to one of the Claims 1 to 9 **characterised in that** the conveying screws (6) of the first hopper half (3) can be operated independently of the conveying screws (7) of the second hopper half (4).

11. Material conveyor system according to one of the Claims 1 to 10 **characterised in that** the conveying screws (6, 7) are arranged at an angle ß > 60° towards the main conveyor device (5).

12. Material conveyor system according to one of the Claims 1 to 11 **characterised in that** the conveying screws (6, 7) can be rotated to the left and to the right.

13. Material conveyor system according to one of the Claims 1 to 12 **characterised in that** the hopper halves (3, 4) are supported such that they can be simultaneously or independently pivoted around an axis x.

14. Material conveyor system according to one of the Claims 1 to 13 **characterised in that** the conveying screws (6, 7) can also be switched on after a delay at the beginning of a feeding cycle and / or switched off early towards the end of a feeding cycle.

15. Road paver or feeder with a material conveyor system (1) according to one of the Claims 1 to 14.

## Revendications

1. Système de transport de matériau (1) pour finisseur de route et alimentateur, comprenant :
une trémie de matériau (2), qui comporte une première et une deuxième moitié de trémie (3, 4),
un dispositif de transport principal (5), qui définit un flux de transport principal et se situe entre la première et la deuxième moitié de trémie (3, 4), et
des vis sans fin de transport (6, 7), qui définissent un flux de transport transversal et sont agencées dans les moitiés de trémie (3, 4), les vis sans fin de transport (6, 7) pouvant fonctionner indépendamment du dispositif de transport principal (5),
**caractérisé par**
un système de mesure de température destiné à mesurer une température du flux de transport principal et/ou du flux de transport transversal, en vue de commander un fonctionnement des vis sans fin de transport (6, 7) indépendamment du dispositif de transport principal (5).

2. Système de transport de matériau selon la revendication 1, **caractérisé par** un système de commande pour commander le flux de transport transversal indépendamment du flux de transport principal, en vue de commander un rapport ou une proportion entre le flux de transport transversal et le flux de transport principal.

3. Système de transport de matériau selon la revendication 1 ou la revendication 2, **caractérisé en ce que** sur les moitiés de trémie (3, 4) est agencée, en direction du dispositif de transport principal (5), une tôle de glissement (11) pivotante, pour diriger du matériau transporté, sur le dispositif de transport principal (5).

4. Système de transport de matériau selon les revendications 1 à 3, **caractérisé en ce que** le dispositif de transport principal (5) comprend deux bandes de transport (8, 9), qui sont séparées l'une de l'autre par une paroi de séparation (10).

5. Système de transport de matériau selon la revendication 4, **caractérisé en ce que** les bandes de transport (8, 9) peuvent fonctionner indépendamment l'une de l'autre.

6. Système de transport de matériau selon l'une des revendications 1 à 5, **caractérisé en ce que** les moitiés de trémie (3, 4) peuvent basculer simultanément ou indépendamment l'une de l'autre en direction du dispositif de transport principal (5) selon un angle 0°< α <45°.

7. Système de transport de matériau selon l'une des revendications 1 à 6, **caractérisé en ce que** lors d'un basculement des moitiés de trémie (3, 4), les vis sans fin de transport (6, 7) basculent avec celles-ci.

8. Système de transport de matériau selon l'une des revendications 1 à 7, **caractérisé en ce qu'**une ou plusieurs vis sans fin de transport (6, 7) sont prévues par moitié de trémie (3, 4).

9. Système de transport de matériau selon l'une des revendications 1 à 8, **caractérisé en ce qu'**une extrémité avant des vis sans fin de transport (6, 7) dépasse au-dessus du dispositif de transport principal (5).

10. Système de transport de matériau selon l'une des revendications 1 à 9, **caractérisé en ce que** les vis sans fin de transport (6) de la première moitié de trémie (3) peuvent fonctionner indépendamment des vis sans fin de transport (7) de la deuxième moitié de trémie (4).

11. Système de transport de matériau selon l'une des revendications 1 à 10, **caractérisé en ce que** les vis sans fin de transport (6, 7) sont agencées en formant un angle β > 60° par rapport au dispositif de transport principal (5).

12. Système de transport de matériau selon l'une des revendications 1 à 11, **caractérisé en ce que** les vis sans fin de transport (6, 7) peuvent tourner selon un sens de rotation à droite ou à gauche.

13. Système de transport de matériau selon l'une des revendications 1 à 12, **caractérisé en ce que** les moitiés de trémie (3, 4) sont montées de manière à pouvoir pivoter simultanément ou indépendamment l'une de l'autre autour d'un axe x.

14. Système de transport de matériau selon l'une des revendications 1 à 13, **caractérisé en ce qu'**au début et/ou à la fin d'un cycle d'alimentation, les vis sans fin de transport (6, 7) peuvent être mises en marche de manière retardée et/ou arrêtées de manière prématurée.

15. Finisseur de route ou alimentateur comprenant un système de transport de matériau (1) selon l'une des revendications 1 à 14.
